# EUROPEAN PATENT APPLICATION

(11) **EP 2 584 520 A1**
(43) Date of publication of application: **24.04.2013**
(21) Application number: 10853282.1
(22) Date of filing: 17.06.2010
(51) Int. Cl.: G06Q 50/00

(54) **METHOD FOR PROVIDING A STUDY PATTERN ANALYSIS SERVICE ON A NETWORK, AND A SERVER USED THEREWITH**

(71) Applicant: Intellectual Discovery Co., Ltd., Seoul 135-745 (KR)
(72) Inventor: LEE, Sang Gyu, Seongnam-si Gyeonggi-do 463-500 (KR)
(74) Representative: TER MEER - STEINMEISTER & PARTNER GbR
(86) International application number: PCT/KR2010/003900
(87) International publication number: WO 2011/158981

(57) **Abstract**

Disclosed are a method for providing a study pattern analysis service on a network, and a server used therewith. The server receives identification information, which is read by a smart pen used by a student to solve questions printed on a study material where the identification information for each question is marked on locations where the questions are printed, from the smart pen and generates study pattern information of the student based on the identification information received in the server. The study pattern analysis and study guidance for individual students using the study material are possible.

## Description

### [Technical Field]

The present invention relates to a method for providing a study pattern analysis service on a network and a server used therewith. More particularly, the present invention relates to a method for providing a study pattern analysis service on a network, which can analyze study patterns for individual students to guide the study of the individual students, and a server used therewith.

### [Background Art]

Recently, as education markets have been grown, many students study at home by using study materials periodically delivered to their home. However, the study materials represent a problem in that the study materials cannot guide the discriminative study suitable for the learning ability of the individual students.

For this reason, some education providers employ teachers to visit individual students to check his or her learning status on a regular basis. There are, however, physical limitations in terms of visiting frequency and time of the teachers. In addition, the education providers may bear the expenses, such as the labor cost of the visiting teachers, so the management for individual student members by the visiting teachers may represent limitations.

### [Disclosure]

### [Technical Problem]

Therefore, an object of the present invention is to provide a method for providing a study pattern analysis service on a network, which can analyze study patterns for individual students to guide the study of the individual students, and a server used therewith.

### [Technical Solution]

In order to accomplish the above object, according to one aspect of the present invention, there is provided a method for providing a study pattern analysis service on a network, the method including receiving identification information, which is read by a smart pen used by a student to solve questions printed on a study material where the identification information for each question is marked on locations where the questions are printed, in a server from the smart pen; and generating study pattern information of the student based on the identification information received in the server.

According to another aspect of the present invention, there is provided a method for providing a study pattern analysis service on a network, the method including receiving identification information, which is read by a smart pen used by a student to solve questions printed on a study material where the identification information for each question is marked on locations where the questions are printed, and student information including at least one of time information about pressure applied to the smart pen by the student, a pressure value applied to the smart pen by the student, humidity information of a hand of the student, pulse information of the student and body temperature information of the student in a server from the smart pen; and generating study pattern information of the student based on the identification information and the student information received in the server.

Preferably, the method further includes storing the study pattern information in the server.

In addition, the method further includes transmitting the study pattern information to a terminal of the student from the server.

Meanwhile, a server according to the present invention includes a receiving module that receives identification information, which is read by a smart pen used by a student to solve questions printed on a study material where the identification information for each question is marked on locations where the questions are printed, from the smart pen; and an analyzing module that generates study pattern information of the student based on the identification information.

In addition, a server according to the present invention includes a receiving unit that receives identification information, which is read by a smart pen used by a student to solve questions printed on a study material where the identification information for each question is marked on locations where the questions are printed, and student information including at least one of time information about pressure applied to the smart pen by the student, a pressure value applied to the smart pen by the student, humidity information of a hand of the student, pulse information of the student and body temperature information of the student from the smart pen; and an analyzing module that generates study pattern information of the student based on the identification information and the student information.

Preferably, the server further includes a storing module that stores the study pattern information.

In addition, the server further includes a transmitting module that transmits the study pattern information to a terminal of the student.

### [Advantageous Effects]

The present invention can analyze study patterns for individual students to coach the study of the individual students.

### [Description of Drawings]

FIG. 1 is a schematic view showing a structure of a system for providing a study pattern analysis service on a network according to the present invention;
FIG. 2 is a functional block view showing a structure of a server in a system for providing a study pattern analysis service on a network according to the present invention; and
FIG. 3 is a flowchart showing a procedure of a method for providing a study pattern analysis service on a network according to the present invention.

### [Best Mode]

### [Mode for Invention]

Hereinafter, the present invention will be described in detail with reference to accompanying drawings. The same reference numerals will be used to refer to the same elements throughout the drawings. In addition, the detailed description about known functions and structures will be omitted when it makes the subject matters of the present invention rather unclear.

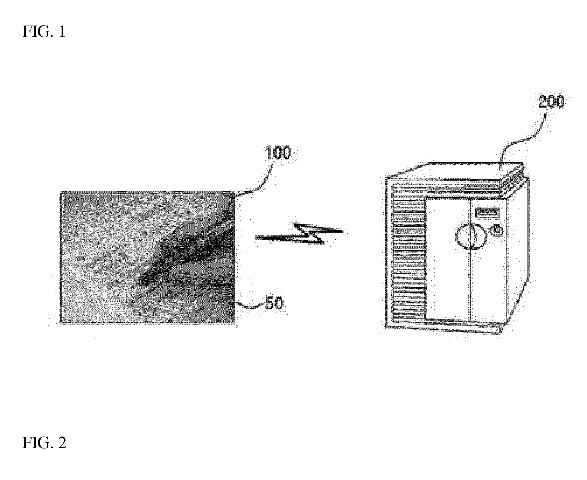

FIG. 1 is a schematic view showing a structure of a system for providing a study pattern analysis service on a network according to the present invention. Referring to FIG. 1, the system for providing the study pattern analysis service on the network according to the present invention includes a study material 50, a smart pen 100 and a server 200.

The study material 50 is printed with questions to be solved by a student and identification information for each question is marked on locations where the questions are printed. The identification information may include a dot code or a bar code which is not visible to the student.

The smart pen 100 is a kind of a reader having a network communication function with the server 200. When the student solves the questions on the study material 50 using the smart pen 100, the smart pen 100 reads the identification information of the question being solved by the student from the study material 50 and transmits the identification information to the server 200. According to the embodiment of the present invention, the smart pen 100 is equipped with a time measurement unit to transmit time information, which represents the reading time of the smart pen 100 for the identification information of the question, to the server 200.

In addition, pressure sensors are provided in a writing portion and a grip portion of the smart pen 100, respectively. Thus, when the student writes down by using the smart pen 100, the smart pen 100 may transmit the pressure values of the writing portion and the grip portion to the server 200 together with time information thereof.

In addition, a humidity sensor is provided in the grip portion of the smart pen 100. The humidity sensor measures humidity from a hand of the student who grips the smart pen 100 to transmit measured humidity information to the server 200.

Further, a pulse sensor and a temperature sensor are provided in the grip part of the smart pen 100 to transmit pulse information and temperature information to the server 200 by measuring the pulse and the temperature from the hand of the student who grips the smart pen 100.

In this specification, information, which is measured by the smart pen 100 and transmitted to the server 100 and includes all or a part of the time information about the pressure, the pressure value, the humidity information of the hand of the student, the pulse information of the hand of the student, and information about the body temperature of the student, will be defined as student information.

Referring to FIG. 1, the server 200 generates study pattern information of the student based on the identification information transmitted from the smart pen 100 as the student solves the questions printed on the study material 50.

That is, the server 200 stores information about the questions corresponding to the identification information of each question printed on the study material 50. The information about the questions may include information about the level of difficulty and the type of the questions. The server 200 may generate information about the sequence of the questions primarily solved by the student and time consumed by the student for each question according to the identification information sequentially received from the smart pen 100 of the student and the time information representing the time at which the identification information is received.

Therefore, the server 200 may acquire information about the questions, that is, information about preferential questions primarily solved by the student and information about the time consumption according to the type of the questions. Based on the above information, the server 200 generates study pattern information suitable for individual students to analyze the study pattern of the individual students.

The server 200 accumulatively stores 200 the study pattern information, which is generated in series, so that the server 200 can make the study pattern report for each student.

Then, the server 200 transmits the study pattern information or the study pattern report, which is made by accumulating the study pattern information, to a terminal of the student so that the student can improve or correct the study pattern by taking the study pattern information or the study pattern report into consideration.

In this specification, information, which is measured by the smart pen 100 and transmitted to the server 100 and includes all or a part of the time information about the pressure, the pressure value, the humidity information of the hand of the student, the pulse information of the hand of the student, and information about the body temperature of the student, will be defined as student information.

In addition, according to the embodiment of the present invention, the server 200 may generate the study pattern information of the student based on the identification information and student information transmitted from the smart pen 100 as the student solves the questions printed on the study material 50.

That is, the server 200 may acquire the time information that represents the time consumed by the student to solve the question corresponding to the identification number based on the identification information sequentially received from the smart pen 100 of the student, the time information about the pressure applied to the writing portion of the smart pen 100 when the student writes down answers and the time information representing the time at which the identification information is received for the first time.

In addition, the server 200 may acquire the state of tension of the student when the student solves the question corresponding to the identification number based on the identification information sequentially received from the smart pen 100 of the student, the pressure value applied to the grip portion of the smart pen 100, the humidity information of the hand of the student, the pulse information or the body temperature information.

In detail, if the pressure value, the humidity information, the pulse information, and the body temperature information received together with specific identification information are higher than the average pressure value and the average humidity information of the student by a predetermined ratio, the server 200 determines that the student feels tension more than ordinary times when the student solves the question corresponding to the identification information.

Furthermore, the server 200 analyzes the time information that represents the time consumed by the student to solve the question corresponding to the identification number. If the analysis result represents that the time consumed by the student to solve the question is longer than the average time consumed for each question by a predetermined ratio, the server 200 finally determines that the type of the question is too hard for the student.

That is, the server 200 may acquire information about the state of tension of the student and the level of difficulty according to the type of the question and this information may be added to the study pattern report for each student.

FIG. 2 is a functional block view showing a structure of the server in the system for providing the study pattern analysis service on the network according to the present invention. Referring to FIG. 2, the server 200 according to the present invention includes a receiving module 210, an analyzing module 230, a storing module 250 and a transmitting module 270.

First, the receiving module 210 of the server 200 receives the identification information and the student information transmitted from the smart pen 100, and the analyzing module 230 of the server 230 generates the study pattern information of the student and the study pattern report for each student based on the identification information and the student information.

In addition, the storing module 250 of the server 200 stores the information about the level of difficulty and the type of the questions as information corresponding to the identification information for each question. In addition, the storing module 250 of the server 200 stores information about preceding study contents related to the type of the questions and the question pool constituting the study material 50, in which the question pool includes questions related to the preceding study contents related to the type of the questions.

In addition, the storing module 250 of the server 200 stores the identification information received in the receiving module 210 of the server 200 together with the time information representing the time at which the student information is reduced as well as the study pattern information and the study pattern report generated by the analyzing module 230 of the server 200.

Further, the transmitting module 270 of the server 200 periodically transmits the study pattern information and the study pattern report generated by the analyzing module 230 of the server 200 to the terminal of the student.

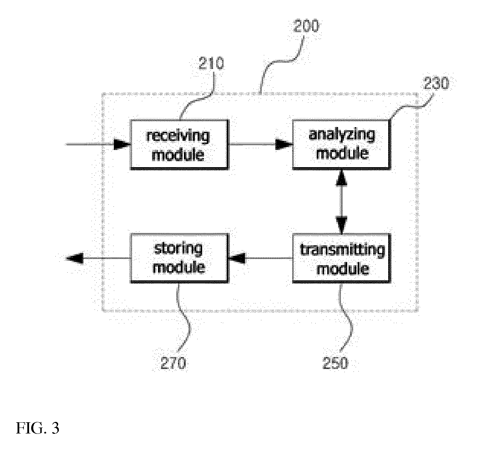

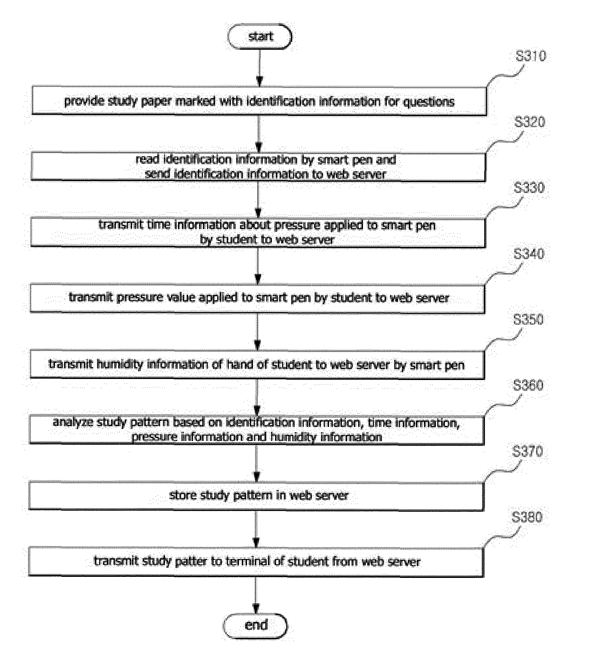

FIG. 3 is a flowchart showing a procedure of a method for providing the study pattern analysis service on the network according to the present invention. Hereinafter, the procedure of the method for providing the study pattern analysis service on the network according to the present invention will be described with reference to FIGS. 1 to 3.

First, in order to implement the present invention, the study material 50 marked with the identification information for the printed question is prepared (S310). That is, the study material 50 used in the present invention is printed with questions to be solved by the student and the identification information for each question is marked on positions where the questions are printed. According to the embodiment of the present invention, the identification information preferably includes a dot code or a bar code which is not visible to the student.

The student having the membership for the study pattern analysis service of the present invention periodically receives a series of study materials 50 from the administrator of the study pattern analysis service. In addition, the student solves the questions in the study material 50 by using the smart pen 100 received from the administrator when the student joins the membership for the service. In this case, the smart pen 100 reads the identification information for the question being solved by the student to transmit the identification information to the server 200 (S320).

According to the embodiment of the present invention, when the identification information is transmitted to the server 200, the time information about the pressure applied to the smart pen 100 by the student may also be transmitted (S330), the value of pressure applied to the smart pen 100 by the student may also be transmitted (S340), and at least one of the humidity information of the hand of the student, the pulse information of the student and the body temperature information of the student may be transmitted as well (S350).

Thus, the receiving module 210 of the server 200 may receive at least one of the identification information, the time information, the pressure value, the humidity information, the pulse information of the student, and the body temperature information of the student transmitted from the smart pen 100.

According to the embodiment of the present invention, the smart pen 100 may transmit the identification information and the student information to the server 200 in real time. In contrast, the smart pen 100 may collectively transmit the identification information and the student information to the server 200 after storing the identification information and the student information in the storing module 250 provided in the smart pen 100 while the student is solving the questions. In this case, preferably, the storing module 250 provided in the smart pen 100 may store the time information for the identification information and the student information as well.

Further, according to the embodiment of the present invention, the smart pen 100 may directly transmit the identification information and the student information stored in the storing module 250 of the smart pen 100 to the server 200. In contrast, the smart pen 100 may transmit the information to the server 200 using a communication terminal after shifting the information to the communication terminal of the student by using a USB port provided in the smart pen 100.

In detail, the communication terminal of the student may include a personal computer (PC) and the student may upload the identification information and the student information stored in the PC to the server 200 by accessing the homepage of the server 200 using the PC.

The identification information and the student information received in the receiving module 210 of the server 210 are stored in the storing module 250 of the server 200 and the analyzing module of the server 200 generates the study pattern information of the student based on the identification information and the student information to analyze the study pattern of the student (S360).

Meanwhile, since the storage module 250 of the server 200 stores the information about the level of difficulty and the type of the questions as the information corresponding to the identification information of each question, the analyzing module 230 of the server 200 may generate information about the sequence of the questions primarily solved by the student and time consumed by the student for each question according to the identification information and the time information representing the time at which the identification information is received. Therefore, the information about the type of the questions preferred by the student and the time consumed by the student according to the type of the questions can be acquired.

In addition, the analyzing module 230 of the server 200 can generate the study pattern information of the student based on the student information in addition to the identification information. That is, the analyzing module 230 of the server 200 may acquire the time information that represents the time consumed by the student to solve the question corresponding to the identification number based on the identification information, the time information about the pressure applied to the writing portion of the smart pen 100 when the student writes down answers and the time information representing the time at which the identification information is received for the first time.

In addition, the analyzing module 230 of the server 200 may acquire the state of tension of the student when the student solves the question corresponding to the identification number based on the identification information, the pressure value applied to the grip portion of the smart pen 100, or the humidity information of the hand of the student.

Furthermore, the analyzing module 230 of the server 200 analyzes the time information that represents the time consumed by the student to solve the question corresponding to the identification number. If the analysis result represents that the time consumed by the student to solve the question is longer than the average time consumed for each question by a predetermined ratio, the analyzing module 230 of the server 200 finally determines that the type of the question is too hard for the student.

That is, the analyzing module 230 of the server 200 may acquire information about the type of questions preferred by the student, the time consumed to solve the question according to the type of the questions, the state of tension of the student according to the type of the questions and the level of difficulty according to the type of the question and the study pattern report for each student may be generated based on the analyzed study pattern.

According to the embodiment of the present invention, the analyzing module 230 of the server 200 may add the advice comment corresponding to the study pattern to the study pattern report based on the analyzed study pattern of the student. For instance, the student may be advised to study the type of the questions determined as to have the high level of difficulty or may be advised to perform the preceding study required for solving the type of the questions having the high level of difficulty.

In addition, the analyzing module 230 of the server 200 may determine the contents of the study material 50 for the student based on the analyzed study pattern of the student in order to prepare the study material 50 suitable for the student. For instance, the contents of the study material 50 may be composed of the questions determined as to have the high level of difficulty and the questions related to the preceding study required for solving the questions having the high level of difficulty.

The study pattern of the student and the study pattern report of the student analyzed by the analyzing module 230 of the server 200 are stored in the storage module 250 corresponding to the individual students (S370), and the transmitting module 270 of the server 200 transmits the analyzed study pattern and the study pattern report to the terminal of the student (S380).

Therefore, the student can improve or correct the study pattern by taking the study pattern information and the study pattern report into consideration.

Although the exemplary embodiments of the present invention have been described, it is understood that the present invention should not be limited to these exemplary embodiments but various changes and modifications can be made by one ordinary skilled in the art within the spirit and scope of the present invention as hereinafter claimed.

### [Industrial Applicability]

The present invention is applicable in the field of education industry using the network.

## Claims

1. A method for providing a study pattern analysis service on a network, the method comprising:
receiving identification information, which is read by a smart pen used by a student to solve questions printed on a study material where the identification information for each question is marked on locations where the questions are printed, in a server from the smart pen; and
generating study pattern information of the student based on the identification information received in the server.

2. A method for providing a study pattern analysis service on a network, the method comprising:
receiving identification information, which is read by a smart pen used by a student to solve questions printed on a study material where the identification information for each question is marked on locations where the questions are printed, and student information including at least one of time information about pressure applied to the smart pen by the student, a pressure value applied to the smart pen by the student, humidity information of a hand of the student, pulse information of the student and body temperature information of the student in a server from the smart pen; and
generating study pattern information of the student based on the identification information and the student information received in the server.

3. The method of claim 1 or 2, further comprising storing the study pattern information in the server.

4. The method of claim 1 or 2, further comprising transmitting the study pattern information to a terminal of the student from the server.

5. A server comprising:
a receiving module that receives identification information, which is read by a smart pen used by a student to solve questions printed on a study material where the identification information for each question is marked on locations where the questions are printed, from the smart pen; and
an analyzing module that generates study pattern information of the student based on the identification information.

6. A server comprising:
a receiving unit that receives identification information, which is read by a smart pen used by a student to solve questions printed on a study material where the identification information for each question is marked on locations where the questions are printed, and student information including at least one of time information about pressure applied to the smart pen by the student, a pressure value applied to the smart pen by the student, and humidity information of a hand of the student from the smart pen; and
an analyzing module that generates study pattern information of the student based on the identification information and the student information.

7. The server of claim 5 or 6, further comprising a storing module that stores the study pattern information.

8. The server of claim 5 or 6, further comprising a transmitting module that transmits the study pattern information to a terminal of the student.
